# EUROPÄISCHE PATENTSCHRIFT

(11) **EP 1 122 472 B1**
(45) Veröffentlichungstag und Bekanntmachung des Hinweises auf die Patenterteilung: **26.04.2006**
(21) Anmeldenummer: 01102224.1
(22) Anmeldetag: 31.01.2001
(51) Int. Cl.: F16J 15/32

(54) **Dichtsystem zwischen einer Welle und einem feststehenden Gehäuseteil**
Sealing between a rotating shaft and a stationary housing
Etanchéité entre un arbre tournant et un logement fixe

(30) Priorität: 01.02.2000 DE 10004265
(43) Veröffentlichungstag der Anmeldung: 08.08.2001
(73) Patentinhaber: Lenze Drive Systems GmbH, 31855 Aerzen (DE)
(72) Erfinder: Zimmer, Detmar, Dr., 32657 Lemgo (DE)
(74) Vertreter: Elbertzhagen, Otto

(56) Entgegenhaltungen:
- EP-A- 0 117 267
- DE-A- 3 908 372
- DE-U- 7 141 842
- US-A- 4 277 072
- PATENT ABSTRACTS OF JAPAN Bd. 0120, Nr. 91 (M-679), 24. März 1988 (1988-03-24) & JP 62 228760 A (TOYO ELECTRIC MFG CO LTD), 7. Oktober 1987 (1987-10-07)

## Beschreibung

Die Erfindung bezieht sich auf ein Dichtsystem der im Gattungsbegriff des Patentanspruchs 1 näher bezeichneten Art.

Derartige Dichtsysteme sind aus den Offenlegungsschriften US-A-4 277 072, EP 0 117 267 A1 und DE 35 35 445 A1 bekannt. Vornehmlich werden die bekannten Systeme in Kurbelwellengehäusen von Brennkraftmaschinen verwendet, wobei es darum geht, ein Gas-Flüssigkeits-Gemisch und ein Luft-Öl-Gemisch voneinander abzudichten. Zwar kommt es auch hierbei darauf an, eine Flüssigkeitsrückförderung zum abgedichteten Flüssigkeitsraum hin zu erzielen, eine vollständige Abdichtung des Flüssigkeitsraums wird mit den bekannten Systemen jedoch nicht erreicht.

Denn bei den bekannten Systemen ist der feststehende Außenring, welcher im wesentlichen den Flüssigkeitsraum nach außen hin begrenzt, mit seiner den Ringspalt begrenzenden Wandung in radialer Richtung gesehen gegenüber der andererseits den Ringspalt begrenzenden Wandung des Innenrings nach außen hin liegend angeordnet. Dadurch wird unter der Fliehkrafteinwirkung das in den abgedichteten Raum zurückzubefördernde Medium gegen eine stillstehende Wandung gedrückt, und es verliert dadurch an Geschwindigkeit in Rotatonsrichtung, wodurch die Fliehkrafteinwirkung sich verringert.

Ein Wellenabdichtsystem anderer Gattung ist aus dem Gebrauchsmuster DE-U1-71 41 842 bekannt. Dort handelt es sich um eine Stillstandsdichtung mit einen sich bei höheren Wellendrehzahlen unter der Fliehkrafteinwirkung aufweitenden, elastischen Dichtring, der einen Raum mit höherem Gasdruck von einem Raum mit niedrigerem Gasdruck bei Wellenstillstand gegen einen Gasübertritt abdichtet. Zusätzlich zu dieser Stillstandsdichtung ist eine Umlaufdichtung vorgesehen, welche bei offener Stillstandsdichtung wirksam ist und beispielsweise aus einer Schwimmringstopfbüchse oder einer Labyrinthdichtung besteht. Die Anordnung des Ringspaltes im Bereich der Stillstandsdichtung kann grundsätzlich beliebig und anders als in dem zitierten Dokument dargestellt, z.B. zylindrisch sein.

Das neue Wellenabdichtsystem ist vornehmlich für den Einsatz bei Getriebemotoren vorgesehen, die aus einem Antriebsmodul und aus einem Getriebemodul bestehen. Um unterschiedlichen Anforderungen zu entsprechen, werden aus einem Baureihen- und Baukastensystem jeweils ein Antriebsmodul und ein Getriebemodul zu einem Gesamtantrieb kombiniert. Die Antriebsmodule übernehmen neben der Einleitung von Drehmoment und Drehzahl die Funktion der eingangsseitigen Abdichtung des Gesamtantriebs gegenüber der Umgebung. Bei allen bekannten Baukastensystemen dieser Art wird die Abdichtung zwischen der umlaufenden Welle des Antriebsmoduls und dessem feststehendem Gehäuse durch Radialwellendichtringe vorgenommen. Zwischen der umlaufenden Welle und der feststehenden Dichtlippe der Radialwellendichtringe entsteht eine Relativbewegung, die zu Verschleiß und damit zu einer zeitlich begrenzten Lebensdauer der Dichtung führt. Die Lebensdauer solcher Dichtungen wird mit wachsender Drehzahl und mit wachsendem Wellendurchmesser kleiner.

Die Erfindung geht deshalb von der Überlegung aus, auch für den letzteren Einsatzfall ein Wellenabdichtsystem zu verwenden, welches den Gattungsmerkmalen entspricht und oberhalb einer Grenzdrehzahl der Welle verschleißfrei arbeitet.

Deshalb liegt der Erfindung die Aufgabe zugrunde, ein Dichtsystem der eingangs genannten Art zu schaffen, welches unter allen Betriebszuständen vom Stillstand über den Anlauf bis zur Nenndrehzahl der Welle hin eine so gut wie vollständige Abdichtung gegenüber dem von dem betreffenden Medium freizuhaltenden Raum ermöglicht.

Diese Aufgabe wird bei dem Dichtsystem der gattungsgemäßen Art durch die kennzeichnenden Merkmale des Patentanspruchs 1 gelöst.

Für die Erfindung ist wesentlich, daß bei rotierendem System der Andruck des kriech- oder fließfähigen Mediums infolge der einwirkenden Zentrifugalkraft im Bereich des Ringspaltes radial nach außen gegen die rotierende Wandung des Innenringes erfolgt und dadurch die Rotationsmitnahme des Mediums nicht gebremst wird. Folglich wirkt selbst im radial äußeren Mündungsbereich des Ringspaltes noch eine Zentrifugalkraft auf das Medium, womit eine sichere Rückförderung des Mediums in den abgedichteten Raum erzielt wird.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: einen Axialschnitt durch ein zwischen einer Welle und einem Gehäuseteil angeordnetes Wellenabdichtsystem und
- Fig. 2: die in Figur 1 eingekreiste Einzelheit "X" in vergrößerter Wiedergabe.

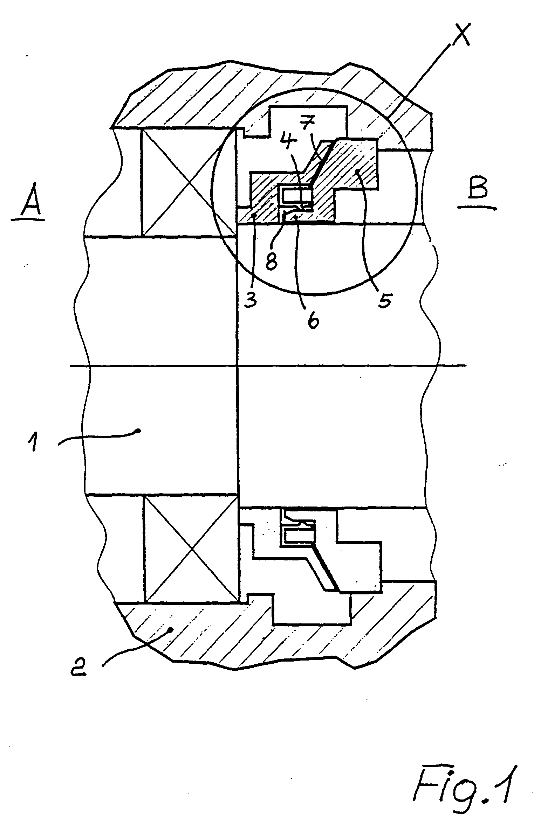

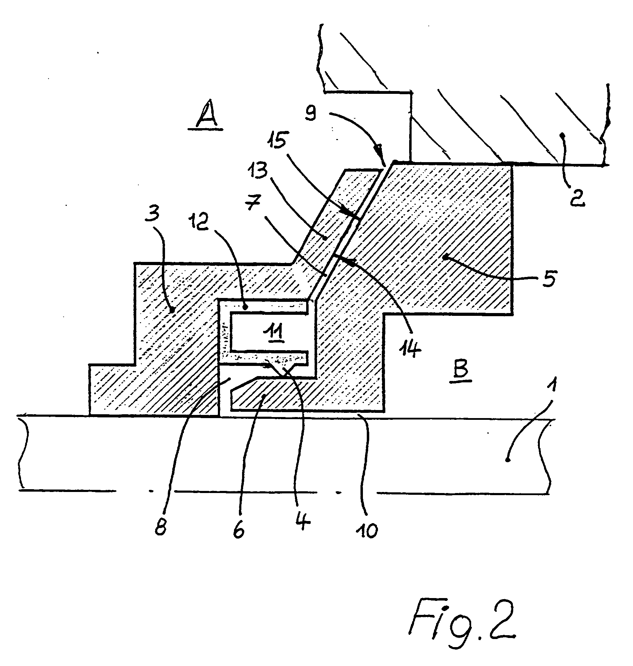

Im einzelnen erkennt man in Figur 1 eine Welle 1, die durch ein Gehäuseteil 2 hindurchgeführt ist. Im Bereich der Wellendurchführung befindet sich eine Wellenabdichtung, die aus einem Innenring 3, einer daran angeordneten Dichtlippe 4 und aus einem Außenring 5 besteht und die weitere Einzelheiten aufweist, welche nachstehend anhand von Figur 2 erörtert werden.

Auf der in Figur 1 linken Seite der Wellendichtung befindet sich ein abzudichtender Raum A, in welchem ein kriech- oder fließfähiges Medium enthalten ist. Es handelt sich bei dem Raum A vornehmlich um den Innenraum eines Getriebes eines Getriebemotors, bei dem das fließfähige Medium aus Schmieröl besteht. Auf der in Figur 1 rechten Seite grenzt an die Wellendichtung ein Raum B an, der von dem im Raum A enthaltenen Medium freizuhalten ist, bei diesem Raum handelt es sich im Fall eines Getriebemotors um den Innenraum des Antriebsmotors. An den abzudichtenden, inneren Raum A grenzt der Innenring 3 und an den freizuhaltenden Raum grenzt der Außenring 5 der Wellendichtung an.

Wie Figur 2 deutlicher erkennen läßt, ist der Innenring 3 drehfest mit der Welle 1 verbunden, während der Außenring 5 an dem feststehenden Gehäuseteil 2 angeordnet ist und somit ebenfalls feststehend ist. Zwischen dem Innenring 3 und dem Außenring 5 besteht ein weitgehend umschlossener, ringförmiger Innenraum 11, in den ein U-förmiger Halter 12 für die Dichtlippe 4 eingesetzt ist, wobei die Dichtlippe 4 an einem Flansch dieses U-förmigen Halters 12 angeordnet ist, der bei Rotation unter Fliehkrafteinwirkung radial nach au-ßen hin ausweichen kann. Die Dichtlippe 4 wird in radialer Richtung nach innen hin von einem Kragen 6 des Außenringes 5 untergriffen. Bei Stillstand und bei niedrigen Drehzahlen der Welle 1 liegt die Dichtlippe 4 auf dem Außenumfang dieses Kragens 6 auf und hebt sich davon bei höheren Drehzahlen unter der Fliekrafteinwirkung bei entsprechender Verformung des Halters 12 ab. Der Innenring 3, die Dichtlippe 4 und der Halter 12 können einstückig ausgeführt sein, dazu kann auf einen geeigneten Kunststoff zurückgegriffen werden, dessen Wandungsstärke im Bereich des Halters 12 und der Dichtlippe 4 auf deren Beweglichtkeit abgestimmt ist.

An die Dichtlippe 4 schließt zur Welle 1 hin ein Ringraum 8 an, der über einen spaltförmigen Ringraum 10 mit dem freizuhaltenden Raum B in Verbindung steht. In Richtung von der Welle 1 weg grenzt der Innenraum 11 an die Dichtlippe 4 an und an diesen Innenraum 11 schließt ein Ringspalt 7 an, der mit dem abgedichteten Raum A in Verbindung steht.

Der Ringspalt 7 verläuft geneigt relativ zur Achse der Welle 7 ebenso zur Radialrichtung, er hat somit sowohl eine axiale als auch eine radiale Richtungskomponente. Begrenzt wird der Ringspalt 7 von einer ersten Wandung 14, die an der Innenseite eines Randteils 13 des Innenringes 3 gebildet ist. Durch das von der Welle 1 weg geneigt am Innenring 3 abstehende Randteil 13 erhält der gesamte Innenring 3 eine Schüsselform, wobei der hohle Teil des Innenringes 3 einen entsprechend erhaben ausgeformten Teil des Außenringes 5 umgibt.

Gegenüber der Wandung 14 des Randteils 13 des Innenringes 3 hat der Außenring 5 eine Wandung 15, die mit der Wandung 14 parallel ist. Beide Wandungen 14 und 15 haben gerade verlaufende Mantellinien, womit die Wandungen 14 und 15 konisch ausgebildet sind. Grundsätzlich können die Wandungen 14 und 15 auch gekrümmt oder gewölbt sein, beispielsweise parabolisch, entscheidend ist lediglich, daß vor allem bei der Wandung 14 am Randteil 13 des Innenringes 3 an jeder Stelle eine solche Neigung relativ zur Achse der Welle 1 vorhanden ist, daß bei Rotation des Innenringes 3 zusammen mit der Welle 1 das im Ringspalt 7 befindliche Medium unter Einwirkung der Zentrifugalkraft in Richtung von der Welle 1 weg bis zu einer in den Raum A übegehenden Mündung 9 des Ringspaltes 7 befördert wird. Wichtig ist, daß in radialer Richtung gesehen die mit der Welle 1 rotierende Wandung 14 des Innenringes 3 nach außen hinliegt.

Bei Rotation der Welle 1 zusammen mit dem Innenring 3 wird auf das Medium im Raum A, das im Stillstand bis zu der auf den Kragen 6 des Außenringes 5 aufliegenden Dichtlippe 4 vordringen kann, von der Drehbewegung mitgenommen und ebenfalls in Rotation versetzt. Die hierdurch radial auf das

Medium wirkende Zentrifugalkraft treibt das Medium aus dem Raum 11 durch den Ringspalt 7 hindurch in den Raum A. Hierbei wird das Medium ständig von der rotierenden Wandung 14 des Randteils 13 des Innenringes 3 mitgenommen, wodurch bis hin zur der Mündung 9 des Ringspaltes 7 eine umso größere Zentrifugalkraft auf das Medium wirkt, die mit dem radialen Abstand von der Welle 1 zunimmt. Somit kann oberhalb einer Grenzdrehzahl eine vollkommene dynamische Abdichtung des Raums A gegenüber dem Raum B erzielt werden, wenngleich ab dieser Grenzdrehzahl die Dichtlippe 4, die mit dem Innenring 3 rotiert, von dem Kragen 6 des Außenringes 5 abgehoben ist.

## Patentansprüche

1. Dichtsystem zwischen einer Welle (1) und einem umgebenden, feststehenden Gehäuseteil (2), in welchem ein ein kriech- oder fließfähiges Medium enthaltender, abgedichteter Raum (A) sowie ein von dem Medium freizuhaltender Raum (B) in Achsrichtung der Welle (1) aneinander angrenzen, bestehend aus einem mit der Welle (1) drehfesten Innenring (3) mit einer sich unter der Fliehkraftwirkung bei rotierender Welle radial aufweitenden, elastischen Dichtlippe (4), die in radialer Richtung zur Welle (1) hin von einem mit ihr koaxialen Kragen (6) eines am Gehäuseteil (2) festen Außenringes (5) untergriffen ist und die den Kragen (6) bei Wellenstillstand sowie bei geringen Drehzahlen berührt, und ferner mit einem in Richtung von der Welle (1) weg an die Dichtlippe (4) anschließenden Ringspalt (7) zwischen dem Innenring (3) und dem Außenring (5), der in den abgedichteten Raum (A) mündet, und mit einem nach innen zur Welle (1) hin an die Dichtlippe (6) anschließenden Ringraum (8), der mit dem freizuhaltenden Raum (B) in Verbindung steht,
**dadurch gekennzeichnet,**
**daß** der an die Dichtlippe (4) anschließende Ringspalt (7) zumindest entlang eines Abschnittes zwischen einer Wandung (14) des Innenringes (3) und einer Wandung (15) des Außenringes (5) verläuft, die beide je eine Neigung relativ zur Wellenachse bzw. zur Radialrichtung mit einer entsprechenden Radial- sowie einer Axialkomponente haben, wobei die Wandung (14) des Innenringes (3) in radialer Richtung nach außen hin liegend die Wandung (15) des Außenringes (5) umgibt.

2. Dichtsystem nach Anspruch 1,
**dadurch gekennzeichnet,**
**daß** die Wandungen (14, 15) des Innenringes (3) und des Außenringes (5) im Bereich des Ringspaltes (7) miteinander parallel sind.

3. Dichtsystem nach Anspruch 1 oder 2,
**dadurch gekennzeichnet,**
**daß** zumindest eine der Wandungen (14, 15) des Innenringes (3) und des Außenringes (5) im Bereich des Ringspaltes (7) konisch ist.

4. Dichtsystem nach einem der Ansprüche 1 bis 3,
**dadurch gekennzeichnet,**
**daß** der Innenring (3) die Form einer Schüssel hat und einen geneigten Randabschnitt (13) aufweist, dessen Innenseite die den Ringspalt (8) begrenzende Wandung (14) bildet, welche einem geneigten Stirnseitenabschnitt des Außenringes (5), der die Wandung (15) bildet, gegenüberliegt.

5. Dichtsystem nach einem der Ansprüche 1 bis 4,
**dadurch gekennzeichnet,**
**daß** derInnenring (3) und die Dichtlippe (4) mit einem diese tragenden Halter (12) eine bauliche Einheit bilden.

6. Dichtsystem nach Anspruch 5,
**dadurch gekennzeichnet,**
**daß** der Innenring (3), die Dichtlippe (4) und deren Halter (12) einstückig sind.

## Claims

1. Sealing between a shaft (1) and a surrounding stationary housing part (2) in which a sealed chamber (A) containing a creeping or fluid medium adjoins in the axial direction of the shaft (1) a chamber (B) to be kept free of the medium, consisting of an inner ring (3) rotationally secured to the shaft (1) and having an elastic sealing lip (4) which widens out radially through the effect of centrifugal force as the shaft rotates and which is engaged underneath in the radial direction relative to the shaft (1) by a coaxially aligned collar (6) of an outer ring (5) which is fixed on the housing part (2) and which (lip) contacts the collar (6) when the shaft is stationary as well as at low speeds, and furthermore having a ring gap (7) which adjoins the sealing lip (4) away from the shaft (1) between the inner ring (3) and the outer ring (5) and which opens into the sealed chamber (A), and having an annular chamber (8) which is connected to the chamber (B) which is to be kept clear,
**characterised in that**
the ring gap (7) which adjoins the sealing lip (4) runs at least along a section between a wall (14) of the inner ring (3) and a wall (15) of the outer ring (5) which are each inclined relative to the shaft axis and radial direction respectively with a corresponding radial and axial component whereby the wall (14) of the inner ring (3) lying radially on the outside surrounds the wall (15) of the outer ring (5).

2. Sealing system according to claim 1,
**characterised in that**
the walls (14, 15) of the inner ring (3) and outer ring (5) are parallel with each other in the region of the ring gap (7).

3. Sealing system according to claim 1 or 2,
**characterised in that**
at least one of the walls (14,15) of the inner ring (3) and outer ring (5) is conical in the region of the ring gap (7) .

4. Sealing system according to one of claims 1 to 3,
**characterised in that**
the inner ring (3) is key-shaped and has an inclined edge section (13) whose inner side forms the wall (14) which defines the ring gap (8) and which is opposite an inclined side end section of the outer ring (5) which forms the wall (15).

5. Sealing system according to one of claims 1 to 4,
**characterised in that**
the inner ring (3) and the sealing lip (4) form one structural unit with a holder (12) supporting same.

6. Sealing system according to claim 5,
**characterised in that**
the inner ring (3), the sealing lip (4) and its holder (12) are in one piece.

## Revendications

1. Système d'étanchéité entre un arbre tournant (1) et un élément de logement (2) fixe qui l'entoure, dans lequel une chambre (A) étanchée, contenant un milieu visqueux ou fluide, ainsi qu'une chambre (B) à maintenir exempte de fluide, sont contiguës l'une à l'autre dans la direction axiale de l'arbre (1), consistant en une bague intérieure (3) solidaire en rotation de l'arbre (1), avec une lèvre d'étanchéité (4) élastique, s'évasant radialement sous l'effet de la force centrifuge lors de la rotation de l'arbre, laquelle est soutenue dans la direction radiale de l'arbre (1), par un col coaxial (6) d'une bague extérieure (5) fixée à l'élément de logement (2), et touchant le col (5) quand l'arbre est arrêté, ainsi qu'en cas de faible vitesse de rotation, et, de plus, avec un interstice annulaire (7) succédant à la lèvre d'étanchéité (4), dans la direction s'écartant de l'arbre (1), entre la bague intérieure (3) et la bague extérieure (5), lequel interstice annulaire débouche dans la chambre étanchée (A), et avec une chambre annulaire (8) succédant à la lèvre d'étanchéité (6), vers l'intérieur, en direction de l'arbre (1), laquelle est reliée à la chambre (B) à maintenir libre,
**caractérisé en ce que**
l'interstice annulaire (7), succédant à la lèvre d'étanchéité, (4), s'étend au moins le long d'une section entre une paroi (14) de la bague intérieure (3) et une paroi (15) de la bague extérieure (5), qui, toutes deux, présentent une inclinaison par rapport à l'axe de l'arbre resp. une composante radiale correspondante ainsi qu'une composante axiale dans la direction radiale, la paroi (14) de la bague intérieure (3), située radialement vers l'extérieur, entourant la paroi (15) de la bague extérieure (5).

2. Système d'étanchéité selon la revendication 1,
**caractérisé en ce que**
les parois (14, 15) de la bague intérieure (3) et de la bague extérieure (5) sont parallèles l'une à l'autre, dans la région de l'interstice annulaire (7).

3. Système d'étanchéité selon la revendication 1 ou 2,
**caractérisé en ce que**
l'une au moins des parois (14, 15) de la bague intérieure (3) et de la bague extérieure (5) est conique dans la région de l'interstice annulaire (7).

4. Système d'étanchéité selon l'une des revendications 1 à 3,
**caractérisé en ce que**
la bague intérieure (3) présente la forme d'une clé et une zone marginale (13) inclinée, dont la face intérieure forme la paroi (14) qui, limitant l'interstice annulaire (8), est située à l'opposé d'une zone latérale, frontale de la bague extérieure (5) qui forme la paroi (15).

5. Système d'étanchéité selon l'une des revendications 1 à 4,
**caractérisé en ce que**
la bague intérieure (3) et la lèvre d'étanchéité (4), avec support (12) portant celle-ci, forment une unité structurelle.

6. Système d'étanchéité selon la revendication 5,
**caractérisé en ce que**
la bague intérieure (3), la lèvre d'étanchéité (4) et le support (12) de celle-ci sont formés d'une seule pièce.
